# EUROPEAN PATENT APPLICATION

(11) **EP 4 252 702 A1**
(43) Date of publication of application: **04.10.2023**
(21) Application number: 22425017.5
(22) Date of filing: 29.03.2022
(51) Int. Cl.: A61C 8/00

(54) **SUPPORT SYSTEM FOR TEMPORARY DENTAL PROSTHESIS IN CASE OF IMMEDIATE LOADING OF MULTIPLE IMPLANTS**

(71) Applicant: GMT S.r.l., 28013 Gattico-Veruno (NO) (IT)
(72) Inventor: GMT S.r.l., 28013 Gattico-Veruno (NO) (IT)

(57) **Abstract**

The object is called "temporary dental prosthesis support system in cases of immediate loading of several implants".

The reference technique for the development of this system is called "Toronto bridge", with the purpose of replacing an entire dental arch. With this system it is possible to assemble the provisional dental prosthesis in times far lower than the standard of the existing technique.

The peculiarity lies in the fact that the structure is composed of different male and female micrometric adjustment cap and the fact that the curved bar is not welded but simply hooked to the female micrometric control hoods, while ensuring effectiveness and stability.

The system is perfectly suited to the realization of a temporary both for the upper maxillary arch and mandibular arch and, precisely because of its simplicity, significantly reduces the time of stay of the patient in the dental practice.

## Description

This refers to a temporary dental prosthesis support system in cases of immediate loading of several implants.

This refers specifically to a system of support of temporary dental prostheses in cases of immediate loading of several implants, following the technique called "Toronto bridge".

In order to express the benefits of the temporary dental prosthesis support system in cases of immediate loading of multiple implants, it is useful to briefly highlight the main stages of the construction of a prosthesis with "Toronto bridge" technique.

As known, this technique is intended to replace an entire dental arch, which can be the upper maxillary arch or mandibular arch, with lower number of implants than the number of teeth to be restored. The first step is the insertion of the necessary implants for the replacement of teeth with a prosthesis. This prosthesis, which is installed immediately after the insertion of the systems, however, is of a provisional type. It is argued that before inserting the final prosthesis should take time for healing of tissues, the period for optimal recovery is about 3 months for the lower arch and 6 months for the upper.

After this time we proceed by taking a precision imprint for the construction of the final prosthesis, consisting of a durable structure, which can be made in different materials depending on the technique, above which the teeth are molded, resin or ceramic according to the customer's request to obtain the desired aesthetic result.

Despite the relatively long time to carry out each phase of this process, the final result looks very natural and comfortable, since the prosthesis remains fixed and faithfully reproduces a perfect dental arch.
The main objective of this system is to create a support structure for temporary dental prosthesis in cases of immediate loading of several implants that leads to improvements compared to the techniques already known.

One of the objectives of this system is to create a support structure for temporary dental prosthesis of simple assembly, consisting of a few elements, that allows a faster construction of the temporary prosthesis and consequently a reduction in the time of stay in the patient's dental practice.

One of the main purposes of the system is to make the process faster because of its simplicity and efficiency, on the one hand to put the patients in the least stressful conditions possible, both physically and psychologically, on the other hand to enable professionals to carry out their work without experience any particular difficulties.

Another purpose is to create a system adaptable to both the upper maxillary arch and mandibular arch.

These objectives are achieved by this temporary dental prosthesis support system in cases of immediate loading of several implants, consisting of a series of adjustable elements to ensure better adaptability to both the type of implant used and the conditions of the dental arch of the patient, including a curved bar, a several caps with male micrometric adjustment, several caps with micro-metric female adjustment and several fixing screws.

The drawings below will be described, for a better understanding of the characteristics of the various components of the system and the advantages.
Figure 1 represents the external view of the cap with male micrometric adjustment;
Figure 2 represents the internal view of the cap with male micrometric adjustment;
Figure 3 represents the internal view of the male micrometric adjustment;
Figure 4 shows the external view of the fixing screw;
Figure 5 represents the inside view from the top of the fixing screw;
Figure 6 represents the external view of the cap with female micrometric adjustment;
Figure 7 represents the internal view of the cap with female micrometric adjustment;
Figure 8 shows the top view of the cap with female micrometric adjustment;
Figure 9 represents the linear bar view;
Figure 10 represents the view of the curved bar;
Figure 11 represents the frontal view of the male adjustment caps positioning;
Figure 12 represents the top view of the male micrometric adjustment caps positioning;
Figure 13 represents the front view of the fixing screws for the male micrometric adjustment caps positioning;
Figure 14 represents the frontal view of the female micrometric adjustment caps positioning;
Figure 15 shows the top view of the female micrometric adjustment caps positioning;
Figure 16 shows the frontal view of the temporary dental prosthesis support system in cases of immediate loading of multiple implants;
Figure 17 shows the overhead view of the temporary dental prosthesis support system in cases of immediate loading of multiple implants.

With reference to the above figures, the system includes several male micrometric adjustment caps, several female micrometric adjustment caps, a several fixing screws and a bar, which is then curved to recreate the structure of the provisional prosthesis.

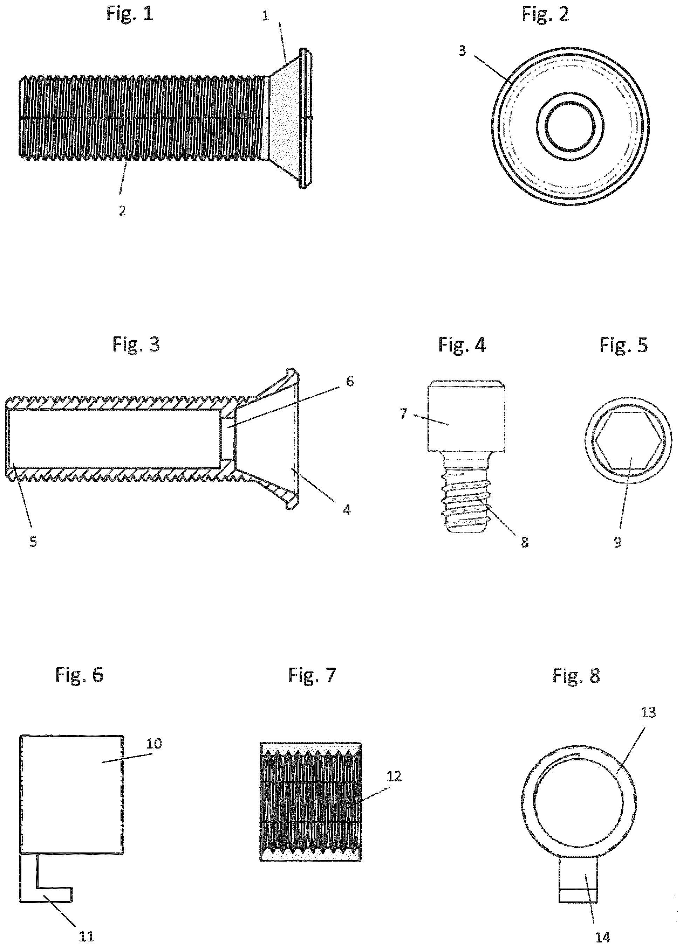

The male micrometric adjustment cap (Figure 1) has an external body (1) and a thread for the adjustment (2) of the support structure of the temporary dental prosthesis. The cap is housed above the MUA (Multi Unit Abutment), making the upper part of the cap match with the conical connection platform (3-4) of the cap.
To anchor the male micrometric adjustment cap to the MUA, a fixing screw is required (Figure 4), the head of which passes through the inner hole (5) and is then screwed (6). With the male micrometric adjustment cap there is the fixing screw (Figure 4), consisting of the external body (7) and the threaded pivot for connection to the MUA (8); in the upper part there is a hexagon for clamping the component (9).

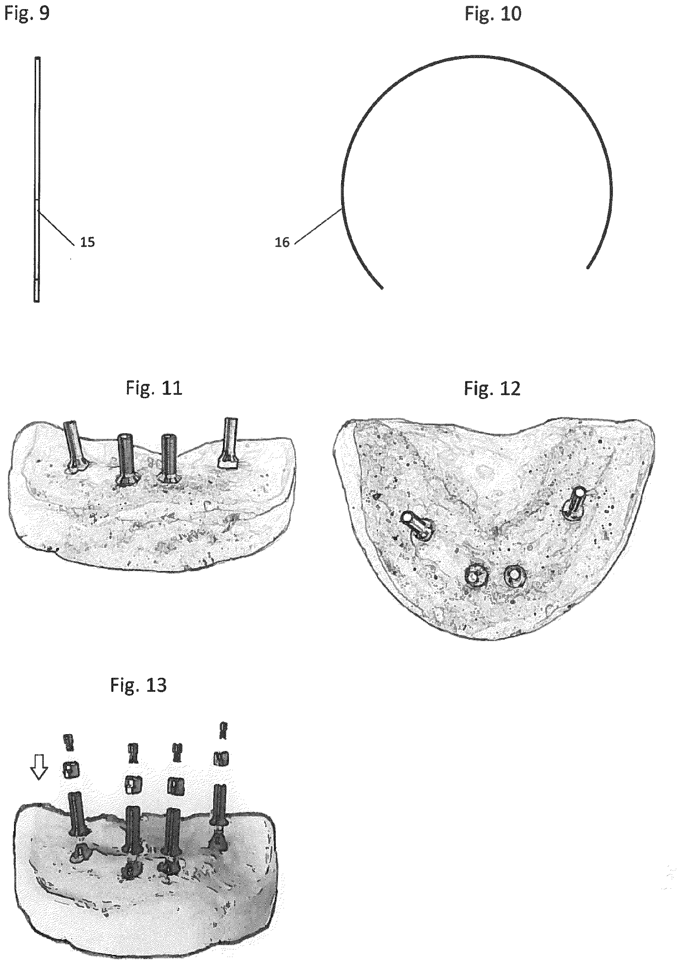

Figures 6,7,8 show below different perspectives the female micrometric adjustment cap. It consists of a body (10), the hook for the bar seen from the side (11) and from the top (14). Internally it has a thread for adjustment (12) suitable to accommodate the male micrometric adjustment cap, while externally it is milled to reduce the footprint and make the structure more streamlined (13). The plan view of the linear bar describes the thickness of the bar (15), while figure 10 shows the development of the bar with the curvature necessary for the realization of the temporary dental prosthesis (16).

The method used to support temporary dental prosthesis in cases of immediate loading involves inserting the implants in place, followed by taking the precision impression, usually plaster. Afterwards, the MUA are screwed to the systems with the help of the fixing screws.

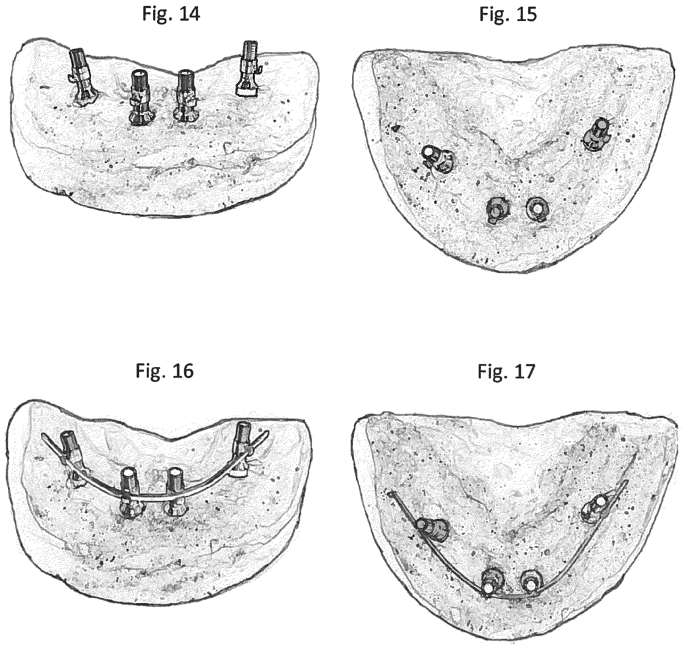

After this preparatory phase, the system described is assembled. After fixing the MUA, the caps with male micrometric adjustment (Figure 11 from the front and 12 from the top) are positioned and locked with the relative fixing screws (Figure 13); the caps with micrometric female adjustment are inserted (Figure 14 from the front and 15 from the top) ideal for attaching the bar. The bar is modeled to recreate dental arch morphology, and then it is hooked and locked (Figure 16 from the front and 17 from the top). In this system the bar is not subject to welding but simply placed in the correct position and then fixed with the help of the caps with micrometric female adjustment that, precisely for the characteristics described above, allows you to speed up the process, however, obtaining a stable and effective result.

The structure of this system of support of temporary dental prostheses in cases of immediate loading of several implants allows you to insert the implants and place the temporary prosthesis in the same day.

For better biocompatibility, the curved bar is preferably made of medical steel, while the caps with male and female micrometric adjustment and the fixing screws are preferably made of medical titanium.
The components of the aforementioned temporary dental prosthesis support system are assembled without welding and attached to the MUA, thus further reducing the time of construction of the rigid structure.

Thanks to the adaptability of the micrometric adjustment caps it is possible to use this system in combination with the products of most manufacturers of dental implants.

Due to the characteristics described above, the system of support of temporary dental prosthesis in cases of immediate loading of multiple implants responds effectively and efficiently to the needs of professionals, both surgeon and laboratory technician, bringing significant advantages in terms of execution speed and simplicity in the construction of the system itself.

Another objective achieved by this system is found by the fact that with this technique of construction of the structure at the base of the provisional prosthesis allows the patient a very reduced stay in the dental practice, bringing advantages also from the point of view of the psychological and physical well-being of the patient.

Due to the adaptability characteristics of the components of the system, it can be easily used both for the upper maxillary arch or mandibular arch.

The system described above may be subject to variations depending on the conditions in which the professionals are operating. The materials that are made of all the components of the temporary dental prosthesis support system in cases of immediate loading of multiple implants may also vary depending on the conditions of the case or the advances of the technique.

## Claims

1. Support system for temporary dental prosthesis in cases of immediate loading of multiple implants **characterized by** the fact of being composed of the following elements: several male micrometric adjustment caps, several female micrometric adjustment caps, several fixing screws and a bar, made curved to recreate the structure of the dental arch.

2. System, according to claim 1, **characterized by** the fact that the male micrometric adjustment caps have a thread adjustment necessary to lower or raise the internal system in order to hook the bar correctly.

3. System, according to claim 1, **characterized by** the fact that the micrometric female adjustment caps have a body and a hook for the bar; in addition, they have an internal thread compatible with the male micrometric adjustment cap. The adjustment system consists in screwing, or unscrewing, the female micrometric adjustment cap until the desired position is reached in order to be able to hook the bar.

4. System, according to claim 1, **characterized by** the fact that the bar is thin enough to allow the modeling to recreate the structure of the dental arch but at the same time resistant to withstand the chewing effort once the restoration process of the dental arch is completed.

5. System for the construction of a temporary dental prosthesis, **characterized by** the fact of including the assembly of the various components without welding them together.

6. System for the construction of a temporary dental prosthesis, **characterized by** the fact of having an adjustment to adapt to each dental arch and every type of dental implant.

7. System for the construction of a provisional dental prosthesis, according to claim 5, **characterised by** the fact that, following the insertion of the implants in place, the taking of the precision impression and the assembly of the MUA, the male micrometric adjustment caps are positioned, locked with fixing screws;
the insertion of the micrometric female control cap and their adjustment by screwing or unscrewing them to reach the correct height;
the positioning of the bar and the respective attachment to the micrometric female control caps.
